# EUROPÄISCHE PATENTSCHRIFT

(11) **EP 1 606 201 B1**
(45) Veröffentlichungstag und Bekanntmachung des Hinweises auf die Patenterteilung: **06.12.2006**
(21) Anmeldenummer: 04701289.3
(22) Anmeldetag: 10.01.2004
(51) Int. Cl.: B65G 63/00, G01N 23/04

(54) **MOBILE MULTIFUNKTIONELLE PLATTFORM FÜR DIE BERÜHRUNGSLOSE LADUNGSKONTROLLE UND DAS TRANSPORTIEREN VON CONTAINERN**
MULTIFUNCTIONAL MOBILE PLATFORM FOR CONTACTLESS LOAD INSPECTION AND FOR TRANSPORTING CONTAINERS
PLATE-FORME MOBILE MULTIFONCTIONNELLE POUR ASSURER SANS CONTACT LE CONTROLE DE CHARGEMENTS ET LE TRANSPORT DE CONTENEURS

(30) Priorität: 25.03.2003 DE 10313248; 25.03.2003 DE 20309047 U
(43) Veröffentlichungstag der Anmeldung: 21.12.2005
(73) Patentinhaber: Noell Mobile Systems & Cranes GmbH, 97080 Würzburg (DE)
(72) Erfinder: WEIS, Otto, 97241 Oberpleichfeld (DE); FRANKE, Klaus-Peter, 97337 Dettelbach (DE)
(74) Vertreter: Lüdtke, Frank
(86) Internationale Anmeldenummer: PCT/DE2004/000017
(87) Internationale Veröffentlichungsnummer: WO 2004/085298

(56) Entgegenhaltungen:
- US-A- 4 293 077
- US-A- 5 638 420

## Beschreibung

Die Erfindung betrifft eine mobile multifunktionelle Plattform für das Transportieren und zur berührungslosen Ladungskontrolle von Containern entsprechend dem Oberbegriff des ersten Patentanspruches.

Die Plattform ist geeignet zur berührungslosen Ladungskontrolle und Transportieren von Containern, vorzugsweise von Containern, die mit Containerkranen be- und entladen werden. Das ist vor allem in Häfen der Fall, in denen Container aus Schiffen be- und entladen werden. Ebenso anwendbar ist die mobile multifunktionelle Plattform auch an anderen Orten, wo Container umgeschlagen werden, beispielsweise in Umschlagplätzen, wo Container von Bahnen auf die Straße umgeschlagen, transportiert und geprüft werden oder auch an Flughäfen, von denen aus Container transportiert werden. Die Plattform ist auch geeignet im Zusammenhang mit Vorrichtungen zum Ein- und Ausbau von Semiautomatiktwistlocks, wie sie beispielsweise in EP 0 699 164 B1 beschrieben sind.

Vorrichtungen zum Durchleuchten von Stückgut sind bekannt und funktionieren in der Regel auf der Basis von Röntgen- oder Gammastrahlen. Sie werden benutzt, um das Gepäck von Passagieren auf geeignete Weise zu durchleuchten und um festzustellen, ob gefährliche Gegenstände im Transportbehälter vorhanden sind. Durchleuchtungsvorgänge und Vorrichtungen, um größere Transportbehälter wie Container zu durchleuchten, sind ebenfalls bekannt. Es handelt sich dabei um größere Einheiten, von denen Strahlungen durch einen Container oder einen Transportbehälter gesandt werden, um zu überwachen, ob Gegenstände und Vorrichtungen, für die ein Transport nicht vorgesehen ist, im Container befindlich sind. Das ist insbesondere an Stellen der Fall, an denen sich Container oder größere Transportbehältnisse im grenzüberschreitenden Verkehr befinden, insbesondere Container, die auf Lastwagen, Flugzeuge oder Schiffe in andere Länder transportiert werden. Problematisch an derartigen Vorrichtungen, die sich am Boden befinden, ist, daß ein Transportmittel mit dem Container die Vorrichtung durchfahren muß, was voraussetzt, daß eine entsprechende Abschirmung für den Fahrer oder in der Nähe befindlicher Personen vorhanden sein muß. Insbesondere ist ein gesonderter Umlade- oder Transportvorgang erforderlich, um einen entsprechenden Container durchleuchten zu können. Derartige Methoden sind insbesondere dann nicht anwendbar, wenn eine große Anzahl von Containern schnell be- und entladen werden soll, da eine lange Standzeit für Container oder eine lange Liegezeit für Schiffe in Häfen ungünstig ist.

Aus US 5,638,420 ist eine gattungsgemäße Vorrichtung bekannt, mit der Container von oben durchleuchtet werden, indem ein Fahrzeug mit Kabine den Container überfährt und ein Durchleuchten vornimmt.

Aus DE 198 26 560 A 1 geht eine Vorrichtung zur Überprüfung des Inhaltes geschlossener Ladungsträger, insbesondere Container, unter Verwendung von Röntgenstrahlen hervor, mit der Container mittels einer auf einem Fahrzeug angeordneten Durchleuchtungseinrichtung seitlich durchleuchtet werden. Beide Vorrichtungen haben den Nachteil, daß nur ein einziger Container und auch erst nach dem Absetzen durch den Kran durchleuchtbar ist und hierzu eine gesonderte Vorrichtung, die den Container überfahren muß, erforderlich ist.

Weitere Entwicklungen, wie sie beispielsweise in "A Revolution in Security Inspection Technology", Dr. Franke, Conference, Rotterdam, 11.02.2003, vorgestellt wurden, sehen vor, Durchleuchtungseinrichtungen an der Krananlage oder einem Podest an der Krananlage so anzuordnen, daß diese Anlagen von Container durchfahren werden und auf diese Weise eine Durchleuchtung des zu transportierenden Stückgutes erfolgt. Nachteilig an dieser Anlage ist allerdings, daß sich vorhandene Krananlagen nicht in jedem Fall mit dieser Ausrüstung nachrüsten lassen, da die ursprüngliche Krankonstruktion nur für ganz bestimmte Lasten ausgelegt ist.

Es ist daher Aufgabe der Erfindung, eine Vorrichtung zu entwickeln, mit der eine berührungslose Ladungskontrolle von Containern möglich ist, ohne daß die genannten Nachteile des Standes der Technik auftreten.

Diese Aufgabe wird durch eine Vorrichtung nach den Merkmalen des ersten Patentanspruches gelöst.

Unteransprüche geben vorteilhafte Ausgestaltungen der Erfindung wieder.

Die erfindungsgemäße Lösung sieht eine mobile multifunktionelle Plattform für das Transportieren und Durchleuchten von Containern vor, welche eine Kranvorrichtung zum Heben der Container, eine Abstellmöglichkeit für Container sowie eine Durchleuchtungseinrichtung mit einer Abschirmung vorhanden sind, wobei die mobile Plattform eine Verfahrmöglichkeit aufweist. Als Verfahrmöglichkeit können Straßenfahrräder, z. B. mit Gummireifen oder aber auch schienengeführte Räder angeordnet sein.

Als Kranvorrichtung der mobilen Plattform kann ein Schwenkkran Anwendung finden, an dem Spreader befestigt sind, wobei die Schwenkarme über Hydraulikzylinder so geschwenkt werden, daß die Container auf der Plattform abgesetzt und von dieser entnommen und neben der Plattform abgesetzt werden können.

Denkbar ist aber auch statt des Schwenkkranes einen Portalkran auf der Plattform anzuordnen, der die Container auf die Plattform hebt und auf der Abstellmöglichkeit der Plattform absetzt.

Vorteilhaft ist es, wenn die mobile Plattform Stützen aufweist, so daß mit ihr Container überfahren werden können. Um ein Heben der Container mittels Portalkran zu ermöglichen, ist es vorteilhaft, in die mobile Plattform eine Öffnung zum Durchreichen von Containern aufweist.

Die selbstfahrende Plattform ist je nach Belastung mit entsprechenden Radsätzen ausgestattet.

Die mobile Plattform kann neben Rädern zum Verfahren Abstützungen mit Aufsatztellern aufweisen, mit denen jederzeit ein stabiler Stand erreicht wird.

Da es vorteilhaft ist, mit der mobilen Plattform Container zu durchleuchten, die mit Containerkrananlagen transportiert werden, muß die Arbeitshöhe der Plattform geringer sein, als die Höhe des Querriegels der zu unterfahrenden Containerbrücke. Um Containertransportfahrzeuge mit ihren Containern überfahren zu können, muß die lichte Höhe unter der Plattform höher sein, als die zu überfahrenden Containerfahrzeuge. Vorteilhaft ist es weiterhin, auf der Plattform einen Bandförderer zum horizontalen Transport der Container anzuordnen.

Weiterhin ist es vorteilhaft, an der mobilen Plattform Kollisionsüberwachungen anzuordnen.

Vorteilhaft ist es weiterhin, Containerbrücke und Plattform steuerungstechnisch miteinander zu koppeln. Die Funktion der Plattform ist in der Weise vorgesehen, daß Container, die beispielsweise durch einen Containerkran von Schiffen entladen werden und durchleuchtet werden müssen, vom Containerkran auf der Abstellposition für Container auf der Plattform abgesetzt werden und auf diese Abstellposition von der Durchleuchtungseinrichtung auf der Plattform überfahren und durchleuchtet wird. Sofern der Inhalt des Containers unbedenklich ist, wird der Container von der Kranvorrichtung der Plattform aufgenommen und zum Weitertransport weitergereicht. Sofern der Container wegen Bedenklichkeit aussortiert werden muß, wird dieser von der Kranvorrichtung und der Transporteinrichtung an einer geeigneten Stelle abgestellt, um den Inhalt zu prüfen, oder der nicht freigegebene Container wird auf das Containerschiff zurücktransportiert. In gleicher Weise können auch Container vom Kai über die Plattform/Durchleuchtung zum Containerschiff transportiert werden.

Im folgenden wird die Erfindung an einem Ausführungsbeispiel und sieben Figuren näher erläutert. Die Figuren zeigen:
- Figur 1:: Containerkran beim Entladen eines Schiffes, unter dem die mobile multifunktionelle Plattform angeordnet ist.
- Figur 2:: Multifunktionelle Plattform mit Schwenkkran in Seitenansicht
- Figur 3:: Multifunktionelle Plattform mit Schwenkkran in Draufsicht
- Figur 4:: Multifunktionelle Plattform ohne Stützen und einem Schwenkkran in Seitenansicht
- Figur 5:: Multifunktionelle Plattform mit Portalkran und einer Öffnung zum Durchreichen von Containern über einem Fahrzeug
- Figur 6:: Multifunktionelle Plattform in perspektivischer Darstellung.
- Figur 7:: Multifunktionelle Plattform mit horizontalem Bandförderer

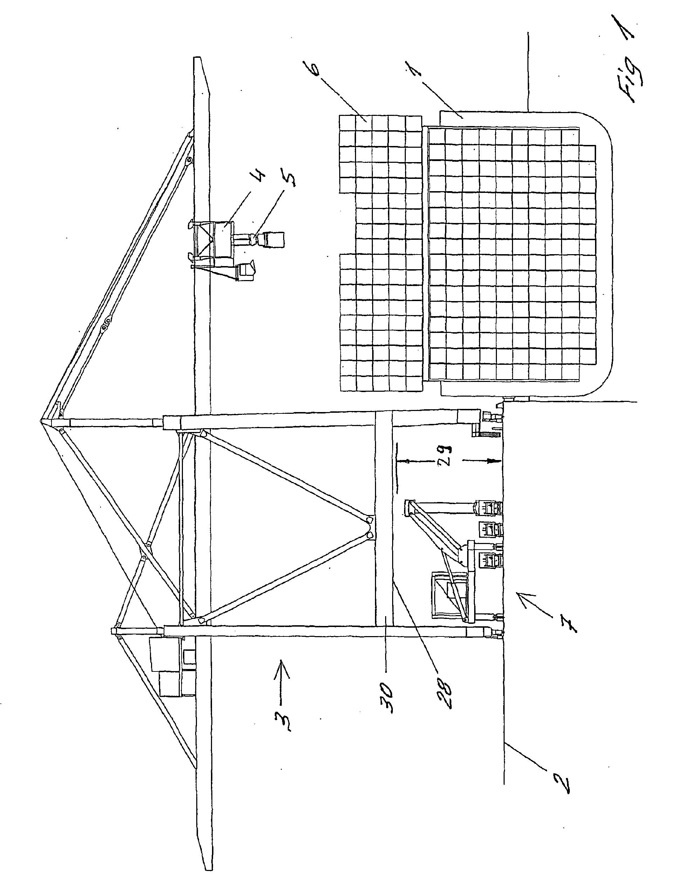

Die *Figur 1* zeigt eine Containerbrücke 3 mit Katze 4 und Spreader 5 beim Entladen von Containern 6 eines Schiffes 1 am Kai 2. Unter der Containerbrücke 3 befindet sich die mobile Plattform 7, deren Arbeitshöhe 29 geringer ist, als die Höhe des Querriegels 30 der Containerbrücke 3.

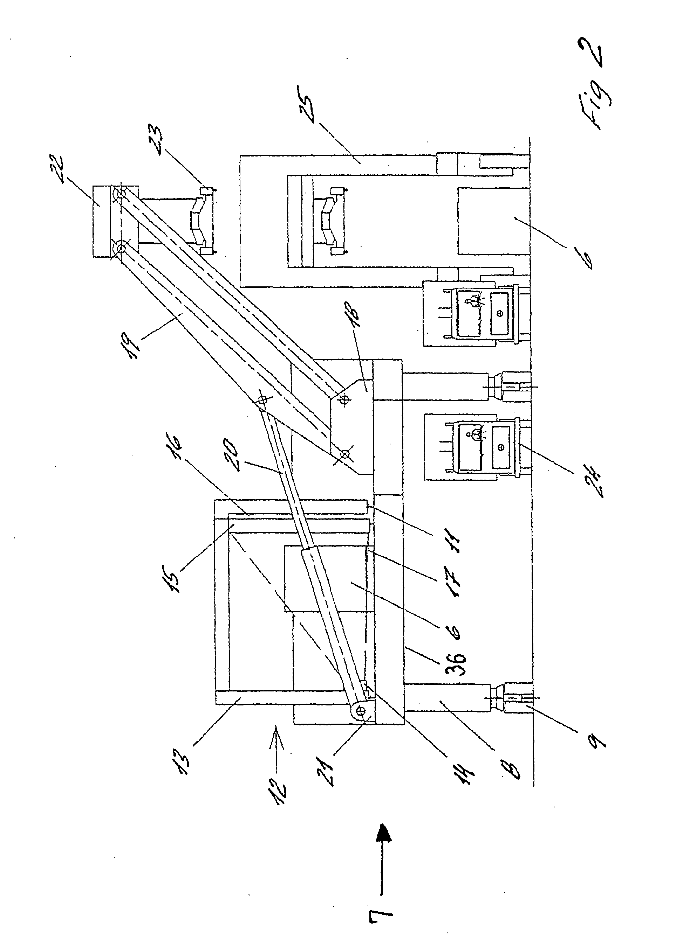

Wie die *Figur* 2 zeigt, weist die Plattform 7 Stützen 8 auf, so daß ihre lichte Höhe 36 ausreicht, um die Containertransportfahrzeuge 24 zu überfahren. Neben Fahrrädern 9, die zum Verfahren der Plattform 7 dienen, sind zur Stabilisierung Abstützungen 10 vorgesehen. Diese Abstützungen 10 können neben den Rädern 9 oder wechselweise mit den Fahrrädern 9 zum Einsatz gelangen. Auf der Plattform 7 angeordnet ist ein Schwenkkran 19 mit Traverse 22 und Spreader 23, mit der Container 6 von den bereitstehenden Containertransportfahrzeugen 24 entnommen werden. Die Arme des Schwenkkranes 19 sind in einer Lagerung 18 gelagert und werden durch Hydraulikzylinder 20 geschwenkt, die mit der Lagerung 21 verbunden sind. Der auf der Plattform 7 auf ein Aufsetzpodest 17 abgesetzte Container 6 wird von einer Durchleuchtungseinrichtung 12 überfahren, bei der auf einer Führungsschiene 11 ein Portalrahmen 13 angeordnet ist, wobei eine Strahlenquelle 14 und ein Strahlendetektor 15 vor einer Abschirmung 16 den Container 6 überfährt, so daß dieser durchleuchtet wird. Das gewonnene Ergebnis der Durchleuchtung wird in einem Bedienstand 27 übermittelt, von dem aus entschieden wird, wohin der Container 6 weitertransportiert wird.

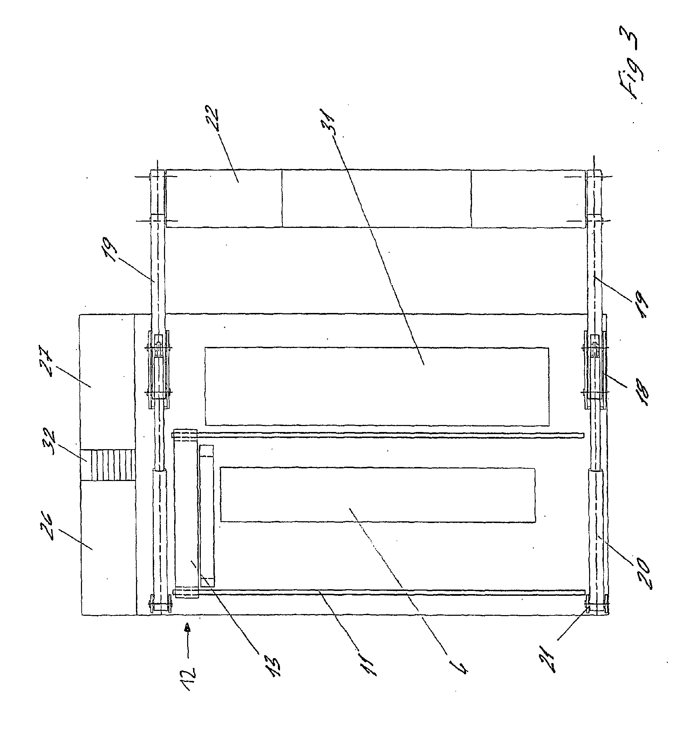

Die *Figur* 3 zeigt eine Draufsicht auf die Plattform 7 mit Container 6, der zur Durchleuchtung bereitsteht. Auf der Fahrschiene 11 bewegt sich die Durchleuchtungsanlage 12 mit ihrem Portalrahmen 13 von einem zum anderen Ende des Containers 6, so daß eine Überprüfung stattfinden kann. Die Traverse 22 mit Hubwerk, der Hydraulikzylinder 20, der Schwenkarm 19 und der Lagebock 21 für den Hydraulikzylinder 20 sind beidseitig des Containers 6 und der Verladeöffnung 31 angeordnet. Die Verladeöffnung 31 dient dazu, Container 6 auf bereitstellende Transportfahrzeuge 24 abzusenken. Auf der rechten Seite der Vorrichtung sind ein Technikraum 26, ein Aufstieg 32 und ein Steuerraum 27 angeordnet.

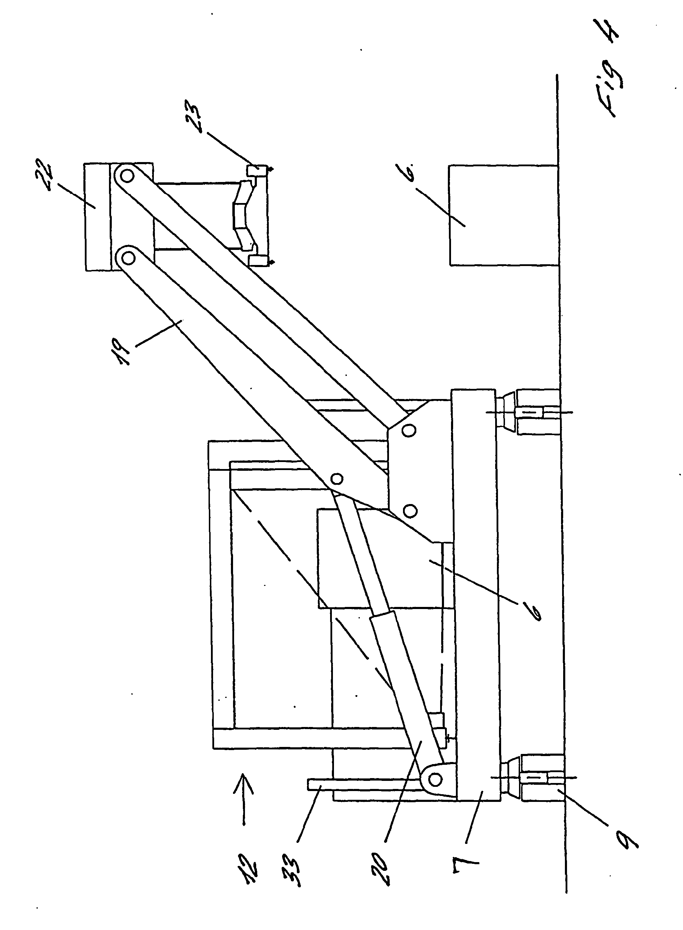

Die *Figur 4* zeigt eine niedrige Plattform 7, an der Fahrräder 9 und Abstützungen 10 angeordnet sind. Der Bau dieser Plattform 7 gleicht im Wesentlichen der einer höherstehenden Plattform 7. Zum Schutz von Personen ist allerdings beidseitig der Durchleuchtungseinrichtung 12 eine Abschirmung 33 angeordnet.

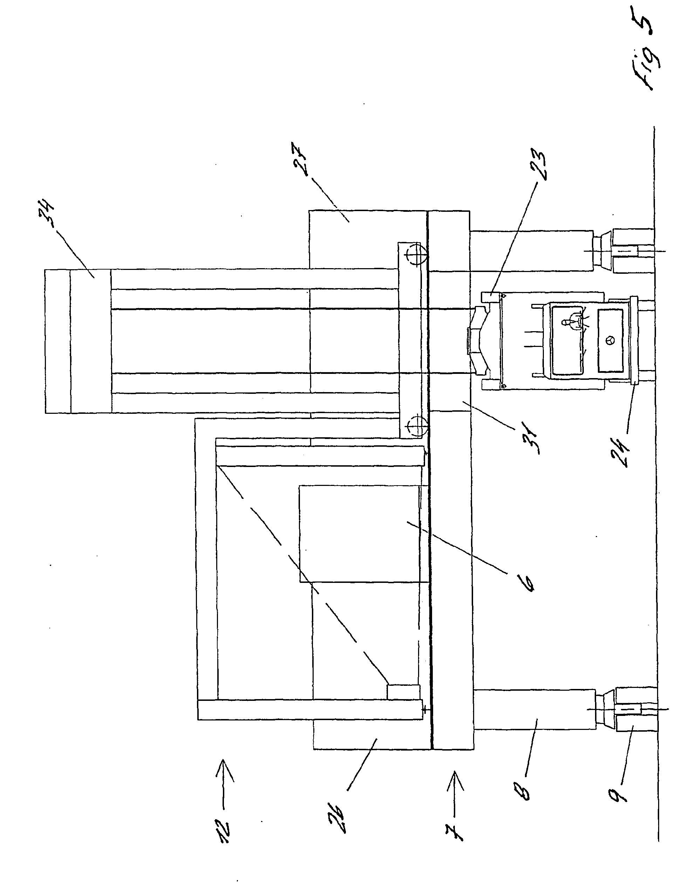

Die *Figur 5* zeigt einen Portalkran 34 beim Entladen eines Transportfahrzeuges 24. Der Portalkran 34 ist nach beiden Seiten auf der Plattform 7 verfahrbar. Mit seinem Spreader 23 erfaßt er den Container 6 des Transportfahrzeuges 24 und setzt ihn auf der Plattform 7 im Arbeitsbereich der Durchleuchtungseinrichtung 12 ab. Hinter der Durchleuchtungseinrichtung 12 ist ein Technikraum 26 angeordnet. Auf gleicher Höhe befindet sich auch der Steuerrahmen 27 der Plattform 7.

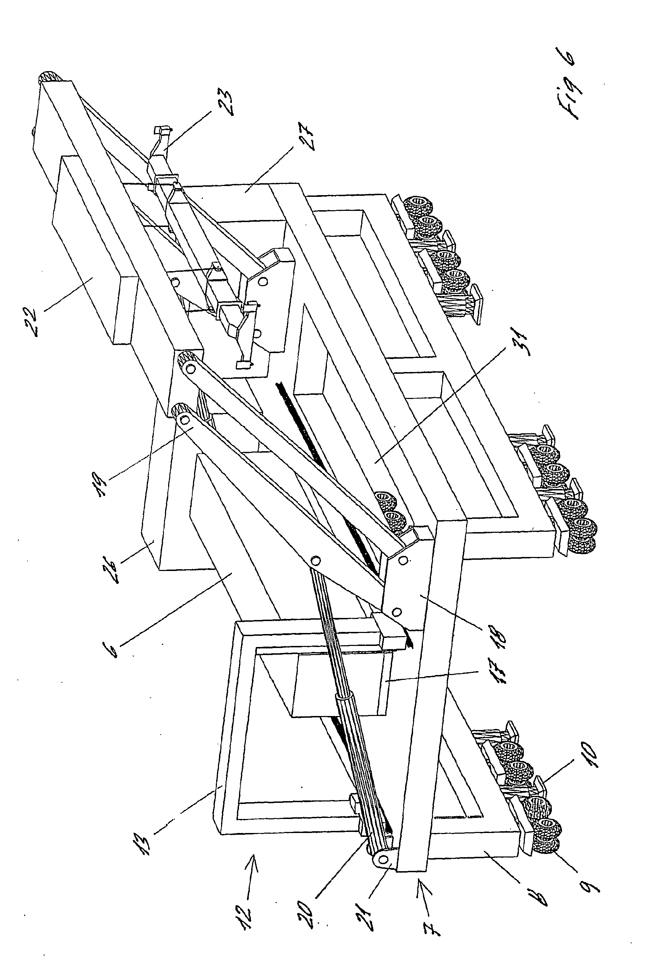

Die *Figur* 6 zeigt die mobile multifunktionelle Plattform in perspektivischer Darstellung, wobei ein Container 6 im Arbeitsbereich der Durchleuchtungsanlage 12 abgesetzt wurde und auf der Plattform 7 der Technikraum 26 und der Steuerraum 27 angeordnet ist. Die Verladeöffnung 31, zu deren beiden Seiten die Lagerböcke 18 des Schwenkranes 19 angeordnet sind, erlaubt ein Entladen der darunter abgestellten Transportfahrzeuge 24. An den beiden Armen des Schwenkkranes 19 ist eine Traverse 22 angeordnet, an der ein Spreader 23 zum Erfassen des Containers 6 dient und auf und ab bewegbar ist. Die Hydraulikzylinder 20 zwischen Lagerböcken 21 und dem Schwenkkran 19 dienen zur Bewegung des Schwenkkranes 19. Die Plattform 7 weist mehrere Stützen 8 auf, unter denen Fahrräder 9 und Abstützungen 10 angeordnet sind.

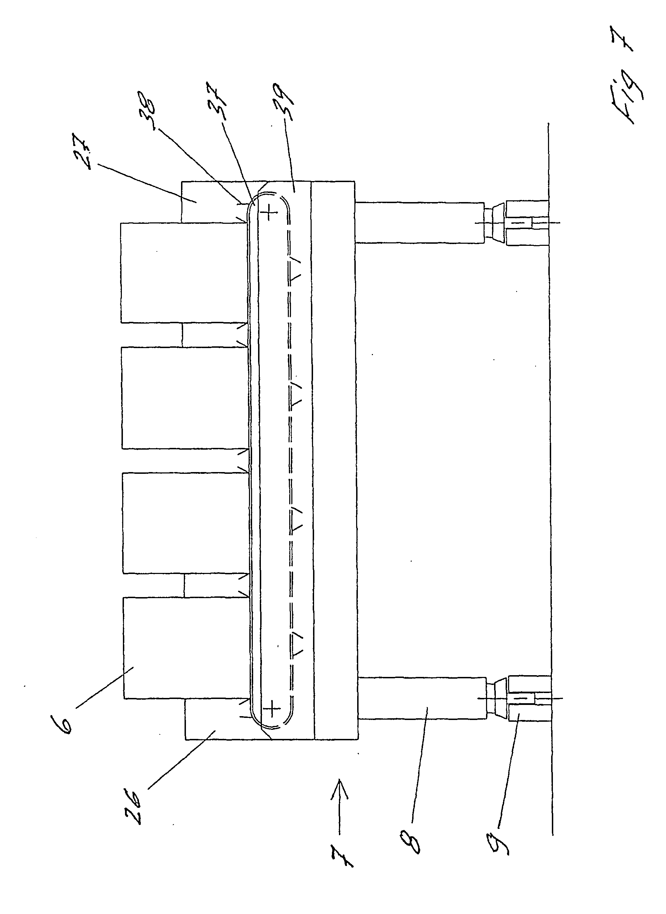

Die *Figur* 7 zeigt eine hohe Plattform 7, an der Stützen 8, Fahrräder 9 und Abstützungen 10 angeordnet sind. Auf der Plattform 7 ist ein horizontaler Bandförderer 37 mit Container-Einführecken 38 und einer Bandauflagekonstruktion 39 aufgebaut.

### Liste der verwendeten Bezugszeichen:

- 1.: Containerschiff
- 2.: Kai
- 3.: Containerbrücke
- 4.: Containerbrücke, -katze
- 5.: Spreader
- 6.: Container
- 7.: Plattform
- 8.: Stützen der Plattform
- 9.: Fahrräder
- 10.: Abstützung
- 11.: Führungsschiene
- 12.: Durchleuchtungsanlage
- 13.: Portalrahmen
- 14.: Strahlenquelle
- 15.: Strahlendetektor
- 16.: Abschirmung
- 17.: Container-Aufsetzpodest
- 18.: Lagerbock - Schwenkkran
- 19.: Schwenkkran
- 20.: Hydraulikzylinder
- 21.: Lagerbock - Hydraulikzylinder
- 22.: Traverse mit Hubwerk
- 23.: Spreader
- 24.: Transportfahrzeug, LKW
- 25.: Transportfahrzeug, Straddle Carrier
- 26.: Technikraum
- 27.: Steuerraum
- 28.: lichte Höhe des Querriegels 3
- 29.: Arbeitshöhe der Plattform
- 30.: Querriegel der Containerbrücke 3
- 31.: Verladeöffnung
- 32.: Aufstieg
- 33.: Plattformabschirmung
- 34.: Portalkran
- 36.: lichte Höhe der Plattform
- 37.: Bandförderer
- 38.: Container-Einführecken
- 39.: Bandauflagekonstruktion

## Patentansprüche

1. Mobile Plattform (7) für die berührungslose Ladungskontrolle und das Transportieren von Containern (6), vorzugsweise von Containern (6), die mit Containerbrücken (3) verladen werden, wobei die mobile Plattform (7) eine Plattform, eine Durchleuchtungseinrichtung (12) zum Durchleuchten von Containern (6), eine Abschirmung (16, 33) und ein Fahrwerk (9) aufweist,
**dadurch gekennzeichnet, daß**
- eine Kranvorrichtung (19, 34) an oder auf der Plattform der mobilen Plattform (7) zum Umsetzen von Containern (6) und zum Abstellen von Containern (6) auf der Plattform der mobilen Plattform (7) angeordnet ist und
- daß die Abschirmung (16, 33) und die Durchleuchtungseinrichtung (12) auf der Plattform der mobilen Plattform (7) angeordnet sind,
- wobei die Abschirmung (16, 33) über und längs einem auf der Plattform der mobilen Plattform (7) abgestellten Container (6) verfahrbar ist.

2. Mobile Plattform (7) nach Anspruch 1, **dadurch gekennzeichnet, daß** zwischen Plattform und Fahrwerk (9) Stützen (8) und ggf. Abstützungen (10) angeordnet sind.

3. Mobile Plattform (7) nach den Ansprüchen 1 und 2, **dadurch gekennzeichnet, daß** die lichte Höhe (28) unter der Plattform höher ist als die zu überfahrenden Containertransportfahrzeuge (24).

4. Mobile Plattform (7) nach den Ansprüchen 1 bis 3, **dadurch gekennzeichnet, daß** die Arbeitshöhe (29) der mobilen Plattform (7) geringer ist, als die Höhe des Querriegels (30) der zu unterfahrenden Containerbrücke (3).

5. Mobile Plattform (7) nach einem der Ansprüche 1 bis 4, **dadurch gekennzeichnet, daß** die Kranvorrichtung einen Schwenkrahmen (19) mit Hydraulikzylindern (20) und integrierte Hubeinrichtung mit Spreader (23) darstellt.

6. Mobile Plattform (7) nach einem der Ansprüche 1 bis 4, **dadurch gekennzeichnet, daß** die Kranvorrichtung einen Portalkran (34) auf der Plattform darstellt.

7. Mobile Plattform (7) nach einem der Ansprüche 1 bis 6, **dadurch gekennzeichnet, daß** die mobile Plattform (7) eine Öffnung (31) zum Durchreichen von Containern (6) aufweist.

8. Mobile Plattform (7) nach einem Ansprüche 1 bis 7, **dadurch gekennzeichnet, daß** an der mobilen Plattform (7) Sensoren zu Kollisionsüberwachung/Positionierung angeordnet sind und die Containerbrücke (3) und die mobile Plattform (7) steuerungstechnisch miteinander gekoppelt sind.

9. Mobile Plattform (7) nach den Ansprüchen 1 bis 8, **dadurch gekennzeichnet, daß** auf der Plattform ein Bandförderer (37) zum horizontalen Containertransport angeordnet ist.

10. Mobile Plattform (7) nach den Ansprüchen 1 bis 9, **dadurch gekennzeichnet, daß** als Fahrwerk (9) schienengeführte Räder angeordnet sind.

## Claims

1. A mobile platform (7) for contactless cargo load control and for transporting containers (6), preferably containers (6) that are loaded with portainers (3), said mobile platform (7) having a platform, a radiation scanning unit (12) for scanning containers (6), a shield (16, 33) and an undercarriage (9),
**characterized in that**
- a crane apparatus (19, 34) is disposed at or on the platform of the mobile platform (7) for transferring containers (6) and for placing containers (6) onto said platform of said mobile platform (7) and
- that said shield (16, 33) and said radiation scanning unit (12) are disposed on said platform of said mobile platform (7),
- said shield (16, 33) being travelable over and along a container (6) placed onto said platform of said mobile platform (7).

2. The mobile platform (7) as set forth in claim 1, **characterized in that** supports (8) and, at need, struts (10) are interposed between platform and undercarriage (9).

3. The mobile platform (7) as set forth in the claims 1 and 2, **characterized in that** the clear height (28) underneath the platform is higher than the container trucks (24) over which it has to travel.

4. The mobile platform (7) as set forth in the claims 1 through 3, **characterized in that** the working height (29) of said mobile platform (7) is lower than the height of the cross beam (30) of the portainer (3) below which it has to pass.

5. The mobile platform (7) as set forth in any one of the claims 1 through 4, **characterized in that** the crane apparatus constitutes a pivoting frame (19) with hydraulic cylinders (20) and an integrated lifting device with spreader (23).

6. The mobile platform (7) as set forth in any one of the claims 1 through 4, **characterized in that** the crane apparatus constitutes a gantry crane (34) on the platform.

7. The mobile platform (7) as set forth in any one of the claims 1 through 6, **characterized in that** the mobile platform (7) has an opening (31) for the containers (6) to pass therethrough.

8. The mobile platform (7) as set forth in any one of the claims 1 through 7, **characterized in that**, on the mobile platform (7), there are arranged sensors for monitoring collisions and for positioning and that the portainer (3) and the mobile platform (7) are coupled together in terms of control.

9. The mobile platform (7) as set forth in the claims 1 through 8, **characterized in that** a belt conveyor (37) for horizontal container transport is disposed on the platform.

10. The mobile platform (7) as set forth in the claims 1 through 9, **characterized in that** wheels guided on rails are disposed as an undercarriage (9).

## Revendications

1. Plate-forme mobile (7) pour le transport et le contrôle sans contact du chargement de conteneurs (6), de préférence de conteneurs (6) chargés par des portiques à conteneurs (3), la plate-forme mobile (7) comportant une plate-forme, un appareil de radioscopie (12) de conteneurs (6), un écran protecteur (16, 33) et un train de roulement (9),
**caractérisée en ce que**
- un dispositif formant grue (19, 34) est disposé à ou sur la plate-forme de la plate-forme mobile (7) pour transférer des conteneurs (6) et pour déposer des conteneurs (6) sur la plate-forme de la plate-forme mobile (7) et
- que l'écran protecteur (16, 33) et l'appareil de radioscopie (12) sont disposés sur la plate-forme de la plate-forme mobile (7),
- l'écran protecteur (16, 33) étant mobile en déplacement par-dessus et le long d'un conteneur (6) déposé sur la plate-forme de la plate-forme mobile (7).

2. Plate-forme mobile (7) selon la revendication 1, **caractérisée en ce que** des supports (8), et le cas échéant des pieds (10), sont interposés entre la plate-forme et le train de roulement (9).

3. Plate-forme mobile (7) selon les revendications 1 et 2, **caractérisée en ce que** la hauteur libre (28) sous plate-forme est supérieure à celle des véhicules de transport de conteneurs (24) par-dessus lesquelles celle-ci doit se mouvoir.

4. Plate-forme mobile (7) selon les revendications 1 à 3, **caractérisée en ce que** la hauteur de travail (29) de la plate-forme mobile (7) est inférieure à la hauteur de la poutre transversale (30) du pont portique (3) par-dessous lequel elle doit passer.

5. Plate-forme mobile (7) selon l'une quelconque des revendications 1 à 4, **caractérisée en ce que** le dispositif formant grue constitue un cadre pivotant (19) avec des vérins hydrauliques (20) et un engin de levage intégré avec spreader (23).

6. Plate-forme mobile (7) selon l'une quelconque des revendications 1 à 4, **caractérisée en ce que** le dispositif formant grue constitue une grue de portique (34) sur la plate-forme.

7. Plate-forme mobile (7) selon l'une quelconque des revendications 1 à 6, **caractérisée en ce que** la plate-forme mobile (7) comporte une ouverture (31) pour le passage de conteneurs (6).

8. Plate-forme mobile (7) selon l'une quelconque des revendications 1 à 7, **caractérisée en ce que** des capteurs de surveillance des collisions / de positionnement sont disposés sur la plate-forme mobile (7) et que le pont portique (3) et la plate-forme mobile (7) sont couplés ensemble en termes de commande.

9. Plate-forme mobile (7) selon les revendications 1 à 8, **caractérisée en ce qu'**une bande convoyeuse (37) pour le transport horizontal des conteneurs est disposée sur la plate-forme.

10. Plate-forme mobile (7) selon l'une quelconque des revendications 1 à 9, **caractérisée en ce que**, comme train de roulement (9), sont disposées des roues guidées dans des rails.
